# EUROPEAN PATENT APPLICATION

(11) **EP 2 719 445 A1**
(43) Date of publication of application: **16.04.2014**
(21) Application number: 12007032.1
(22) Date of filing: 09.10.2012
(51) Int. Cl.: B01D 69/12, B01D 71/32, B01D 69/14, C12P 7/16, B01D 53/22

(54) **Process for concentrating small organic molecules from liquid or gaseous mixtures using a composite membrane comprising a fluoropolymer and hydrophobic siliceous particles**

(71) Applicant: Clariant International Ltd., 4132 Muttenz (CH)
(72) Inventor: Koch, Achim Dr., 85368 Moosburg (DE); Dennewald, Danielle Dr., 80798 München (DE); Zavrel, Micheal Dr., 82140 Olching (DE)
(74) Representative: HOFFMANN EITLE

(57) **Abstract**

Process for concentrating at least one chemical from a liquid or gaseous feed mixture comprising the steps
(a) contacting a liquid or gaseous feed mixture with a first surface of a composite membrane having two surfaces, wherein said feed mixture comprises
- at least one gaseous or liquid diluent and
- at least one chemical having a vapour pressure in pure form of 0.8 mbar or more at 20 °C,

and wherein said composite membrane consists of
(i) a matrix of a fluoropolymer in the form of fibrils, wherein said fluoropolymer has a content of tetrafluoroethylene repeating units of at least 90 mol-% relative to the total amount of repeating units,
(ii) hydrophobic siliceous particles enmeshed into said matrix,

(b) applying reduced pressure to the second surface of the composite membrane which is opposite to the first surface in contact with the feed mixture such that a permeate mixture is obtained on said second surface of the composite membrane, wherein said permeate mixture has a higher content of said at least one organic component and/or hydrogen than said feed mixture;
(c) collecting said permeate mixture.

## Description

### Field of the Invention

This invention relates to a process for the enrichment of an organic component out of a liquid or gaseous mixture using a composite membrane comprising a fluoropolymer that can be formed into fibrils and hydrophobic siliceous particles.

### Background of the Invention

The separation of liquid or gaseous mixtures has been done for decades for many commercial and industrial applications. Examples are chromatographic analytic or preparative separations (HPLC, GC), drying of gases and liquids by porous hydrophilic desiccants, selective ad- and desorption by hydrophobic sorbents (e.g. zeolite) and gas- or liquid separation by vapor permeation or pervaporation.

According to the state of art, pervaporation has been realized by two classic approaches, namely by means of membranes composed of a) polymer or b) ceramic zeolite or porous silica membranes. Permeation control of different permeate species following two different models and depending on the different transport mechanisms of the components through the membrane plays a crucial role in these approaches. The first model is the solution-diffusion model, which holds for non-porous polymer-based membranes and explains the process by dissolution of permeates from the fluid feed into the membrane material followed by diffusion through said membrane based on a concentration gradient. The second model is the pore-flow model applies to porous membranes and explains the separation of permeates by different pressure-driven convective flow through pores within the material and is closely related to the Knudsen Flow mechanism (see P. Sukitpaneenit, T.-S. Chung, L. Y. Jiang "Modified pore-flow model for pervaporation mass transport in PVDF hollow fiber membranes for ethanol-water separation", J. Membrane Sci. 2010, 362 (1-2), 393-406).

Pervaporation may also be realized by using mixed matrix membranes (MMMs). MMMs either consist of an inorganic additive (e.g. zeolite) which has been incorporated into a matrix polymer or of a thin base polymer layer onto which a sorbent has been deposited. The performance of the separation technique depends on the degree of chemical matrix interaction with the permeate molecules as well as on the pore size of the sorbent (zeolite or amorphous silica), which are typically used as microporous selective separation media. As a consequence, MMMs for pervaporation or gas permeation are combinations of solution-diffusion membranes and porosity membranes.

M. H. V. Mulder, J. O. Hendrickman, H. Hegeman, C. A. Smolders "Ethanol-water separation by pervaporation", J. Mebrane Sci. 1983, 16, 269-284 describes different membrane types for the separation of ethanol-water-mixtures by pervaporation.

EP0254758B1 (1986) "Pervaporation process and membrane" claims a membrane system for the separation of small organic molecules from aqueous solutions, comprising zeolite with Si:Al ratio of >12, which is embedded in an elastomeric polymer matrix. The zeolite content lies between 10 and 90% w/w. Furthermore a process for the separation of alcohols from aqueous solutions by using pervaporation is claimed.

It is an advantageous property of PTFE that it is thermally and chemically inert and can be fibrillated at a temperature of more than 19°C upon shear. Hence PTFE fibrils form a cocooning matrix that is capable of incorporating >90% of filler particles, e.g. desiccants and sorbents. State of the art documents which describe the fabrication of such membranes are EP0773829 and EP 0659469, for instance.

N. Qureshi, H.P. Blaschek "Butanol recovery from model solution/fermentation broth by pervaporation: evaluation of membrane performance", Biomass Bioenerg. 1999, 17(2), 175-184 is an overview which describes the suitability of polytetrafluoroethylene (PTFE), polypropylene (PP), polydimethylsiloxane (PDMS) and silicalite as pervaporation membranes for the separation of butanol from model solutions and fermentation broths.

A. Thongsukmak, K. K. Sirkar "Pervaporation membranes highly selective for solvents present in fermentation broths", J. Membrane Sci. 2007, 302, 45-58 describes the utilization of trioctylamine-immobilized hydrophobic porous hollow-fiber substrates for the separation of solvent (acetone, ethanol, butanol) from aqueous solutions and fermentation broths by pervaporation.

T.-S. Chung, L. Y. Jiang, Y. Li, S. Kulprathipanja "Mixed matrix membranes (MMMs) comprising organic polymers with dispersed inorganic fillers for gas separation", Prog. Polym. Sci. 2007, 32, 483-507 comprehensively describes the concept of MMMs in the context of gas separation.

L. M. Vane, V. V. Namboodiri, T. C. Bowen "Hydrophobic zeolite-silicone rubber mixed matrix membranes for ethanol-water-separation: Effect of zeolite and silicone component selection on pervaporation performance", J. Membrane Sci. 2008, 308, 230-241 describes the improvement of pervaporation performance of polysiloxane membranes by incorporation of high-module ZSM-5 molecular sieve.

WO200906457 "A method of making polymer functionalized molecular sieve/polymer mixed matrix membranes" describes a method for fabrication of MMMs from polymer-modified molecular sieve embedded in a polymer matrix, which has been coated on a porous polymer support.

WO2009158157 "Mixed matrix membranes containing ion-exchanged molecular sieves" claims MMMs made from ion-exchanged molecular sieves, e.g. Li-UZM5, in a polymer matrix for liquid, gas and vapor separations.

A. Aroujalian, A. Raisi "Pervaporation as a means of recovering ethanol from lignocellulosic bioconversions", Desalination 2009, 250, 173-181 compares the pervaporation performance of porous PTFE and non-porous dimethylsiloxane (PDMS) and polyoctylmethylsiloxane (POMS) membranes. In this comparison, a selectivity improvement along with lower permeate flux is claimed for non-porous membranes.

L. M. Vane, V. V. Namboodiri, R. G. Meier "Factors affecting alcohol-water pervaporation performance of hydrophobic zeolite-silicone rubber mixed matrix membranes", J. Membrane Sci. 2010, 364, 102-110 describes a performance loss upon ABE pervaporation with PDMS-ZSM-5-Zeolite-MMMs caused by lower material permeability and occupation of zeolite cavities by side-products of the fermentation broth.

KR20100092619(A) "A hybrid separation membrane using hydrophobic zeolite for pervaporation separation and method for manufacturing of the same" claims a polysiloxane/zeolite-based hybrid membrane for pervaporation as well as its fabrication from solution.

CN 102500243 "Manufacture of a molecular sieve/polymer composite pervaporation membrane" claims composite membranes for pervaporation of alcohols, ketones and amines from aqueous media comprising PTFE-, PVDF- or PP-supports and ZSM-5 zeolite coating.

The present state of the art documents show many different approaches towards pervaporation, which may lead to an enrichment of desired components from feed mixtures by the disclosed systems. However, it is still a problem that conventional membrane systems that exhibit a good permeate flux lack a satisfactory degree of selectivity and vice versa. It is also problematic that zeolite membranes are not flexible. Furthermore, classic zeolite membranes must have a completely closed surface structure in order to prevent the permeate molecules from circumventing their well-defined pores. Moreover, the manufacture of such zeolite membranes is tedious and requires a plurality of manufacturing steps, specialized techniques and machinery. Lastly, fouling and, in particular in the case of feed mixtures obtained from biotechnological processes such as fermentation broths, biofouling, i.e. the deposition of organic and/or inorganic matter or living (micro-) organisms on membranes used in in-situ pervaporation has to be avoided in order to prevent a performance loss of the membrane system within a relatively short time.

In view of the current state of the art it is an object of the present invention to provide a process for concentrating of specific chemicals from a liquid or gaseous feed mixture by pervaporation or gas permeation, which does not show the above mentioned disadvantages of conventional systems.

### Description of the Invention

Surprisingly, it was found that this object can be achieved by providing a process for concentrating at least one chemical from a liquid or gaseous feed mixture comprising the steps
(a) contacting a liquid or gaseous feed mixture with a first surface of a composite membrane having two surfaces, wherein said feed mixture comprises
   - at least one gaseous or liquid diluent and
   - at least one chemical having a vapour pressure in pure form of 0.8 mbar or more at 20 °C,
   and wherein said composite membrane consists of
   (i) a matrix of a fluoropolymer in the form of fibrils, wherein said fluoropolymer has a content of tetrafluoroethylene repeating units of at least 90 mol-% relative to the total amount of repeating units,
   (ii) hydrophobic siliceous particles enmeshed into said matrix,
   (iii) optionally at least one further component selected from auxiliary agents, surfactants, lubricants, activated carbon, pigments, glass beads and glass fibres,
   wherein the ratio of the weight of the fluoropolymer forming said matrix (i) to the total weight of said hydrophobic siliceous particles (ii) and said optional at least one further component (iii) is in the range of from 2:98 to 80:20, and the ratio of the weight of said component (ii) to the weight of said further component (iii) is in the range of from 80:20 to 100:0;
(b) applying reduced pressure to the second surface of the composite membrane which is opposite to the first surface in contact with the feed mixture such that a permeate mixture is obtained on said second surface of the composite membrane, wherein said permeate mixture has a higher content of said at least one organic component and/or hydrogen than said feed mixture;
(c) collecting said permeate mixture.

The term "concentrating"in relation to the present invention means that the permeate mixture has a higher concentration as regards the at least one chemical than the feed mixture.

The method according to the present invention is described in more detail in the following:

### - Process step (a)

In process step (a), a feed mixture is contacted with a first surface of the composite membrane having two surfaces. Said first surface in contact with the feed mixture is also referred to as the "feed surface" of the composite membrane.

Said feed mixture is in gaseous or liquid state. The feed mixture comprises at least one gaseous or liquid diluent and at least one chemical having a vapour pressure in pure form of 0.8 mbar or more at 20 °C.

Said diluent can be gaseous or liquid. As exemplary diluents, gases and gas mixtures such as nitrogen, carbon dioxide, air and liquids such as water can be mentioned.

In a preferred embodiment, the feed mixture comprises more than 20 % by weight and less than 100 % by weight of at least one gaseous or liquid diluent relative to the total weight of the feed mixture, more preferably more than 50 % by weight and less than 100 % by weight.

In a further preferred embodiment, the feed mixture comprises more than 50 % by weight and less than 100 % by weight of at least one gaseous or liquid diluent relative to the total weight of the feed mixture.

In a more preferred embodiment, the feed mixture comprises more than 50 % by weight and less than 100 % by weight of water as said at least one gaseous or liquid diluent relative to the total weight of the feed mixture.

In a still more preferred embodiment, the feed mixture comprises more than 50 % by weight and less than 100 % by weight of water as said at least one gaseous or liquid diluent relative to the total weight of the feed mixture and at least one chemical which is hydrogen and/or at least one organic component having 1 to 6 carbon atoms and a vapour pressure in pure form of 0.8 mbar or more at 20 °C. The feed mixture hence can contain hydrogen or at least one organic component or it can contain hydrogen and at least one organic component in combination.

When hydrogen is present in the feed mixture, it is preferably present in an amount that is completely miscible with the feed mixture. Likewise, if at least one organic component as defined hereinabove is present in the feed mixture, it is preferably present in an amount that is completely miscible with the feed mixture. In other words, it is preferred that the liquid or gaseous feed mixture and said at least one organic component and/or said hydrogen are present in a single phase, i.e. not in the form of an emulsion, suspension or dispersion of gas bubbles (in the case of a liquid feed mixture) or in the form of an aerosol (in the case of a gaseous feed mixture).

The feed mixture can furthermore contain one or more solid components suspended in the mixture which solids are different from said at least one organic component. Said solids can be microorganisms such as yeasts, fungi etc., i.e. living or dead cells, organic matter such as biomass (for instance, lignin, hydrolyzed cellulose, hemicellulose, particles of agricultural residues such as straw, husks wood chips etc.). Thus, in a preferred embodiment, the feed mixture is a fermentation broth comprising more than 50 % by weight and less than 100 % by weight of water as said at least one diluent and hydrogen and/or an organic component having 1 to 6 carbon atoms and a vapour pressure in pure form of 0.8 mbar or more at 20 °C.

Examples of said at least one organic component may be chosen from the substance groups comprising alcohol (e.g. ethanol, n-butanol, i-butanol), ether (e.g. methyl tert.-butyl ether, tetrahydrofuran), ketones (e.g. acetone), aldehydes (e.g. acetaldehyde), esters (e.g. ethyl acetate) and carboxylic acids (such as C₁₋₄-acids, e.g. acetic acid, propionic acid).

In an even more preferred embodiment, the feed mixture comprises more than 50 % by weight and less than 100 % by weight of water as said at least one gaseous or liquid diluent relative to the total weight of the feed mixture and, as said at least one chemical, an alcohol having 1 to 6 carbon atoms and a vapour pressure in pure form of 0.8 mbar or more at 20 °C.

It is preferred that the feed mixture contains water in an amount of more than 80 % by weight to less than 100 % by weight relative to the total weight of the feed mixture. In a more preferred embodiment, the feed mixture contains water in an amount of more than 90 % by weight to less than 100 % by weight. In a most preferred embodiment, the feed mixture contains water in an amount of more than 95 % by weight to less than 100 % by weight.

In another preferred embodiment, said at least one organic component is an alcohol, preferably selected from ethanol and butanol.

In a particularly preferred embodiment, said at least one organic component is selected from ethanol, n-butanol, i-butanol, acetone and a combination of thereof.

In a most preferred embodiment, the feed mixture contains water in an amount of more than 80 % by weight to less than 100 % by weight relative to the total weight of the feed mixture and at least one organic component that is selected from ethanol, butanol, acetone and a combination of thereof.

Said feed mixture can be obtained by means of a fermentation process, i.e. said feed mixture can be a fermentation broth.

By contacting the fluid mixture with the feed side of the membrane, the at least one type of organic molecules penetrates into the membrane material.

### - Composite membrane

The composite membrane consists of
(i) a matrix of a fluoropolymer in the form of fibrils, wherein said fluoropolymer has a content of tetrafluoroethylene repeating units of at least 95 mol-% relative to the total amount of repeating units,
(ii) hydrophobic siliceous particles enmeshed into said matrix,
(iii) optionally at least one further component,
wherein the ratio of the weight of the fluoropolymer forming said matrix (i) to the total weight of said hydrophobic siliceous particles (ii) and said optional at least one further component (iii) is in the range of from 2:98 to 60:40, and the ratio of the weight of said component (ii) to the weight of said further component (iii) is in the range of from 80:20 to 100:0.

In a preferred embodiment, the composite membrane can have (iv) a thin sheet of a fluoropolymer on the feed surface, the permeate surface or on both the feed surface and the permeate surface of the composite membrane.

The thickness of the composite membrane is not particularly limited and is suitably selected on basis of considerations regarding satisfactory mechanical stability of the membrane, performance in separation and permeability. Preferably the composite membrane has a thickness in the range of from 10 to 20000 µm, more preferably in the range of from 50. to 10000 µm, most preferably in the range of from 100 to 2000 µm.

In order to avoid that the pressure difference between the first and the second surface of the composite membrane results in a rupture of the membrane, the composite membrane can be arranged on a support having pores or holes which allow the passing of the permeate mixture without significant pressure drop. A examples for said support, a porous glass frit or a porous ceramic, a wire mesh and a metal sheet having a plurality of fine holes can be mentioned.

Providing a thin sheet of a fluoropolymer on the feed surface can further prevent fouling and/or biofouling of the membrane and can also prevent abrasion of the membrane by solids that can be present in the feed mixture.

In the following, the components of the composite membrane will be explained in more detail.

### (i) Matrix of a fluoropolymer in the form of fibrils

The matrix comprises a fluoropolymer, i.e. a homo- or copolymer with a content of tetrafluoroethylene repeating units of at least 90 mol-% monomer content relative to the total amount of repeating units. The fluoropolymer can be fibrillated and forms a porous matrix by fibrillation. It is chemically inert and does not swell upon water contact or contact with organic molecules. Preferably the fluoropolymer has a tetrafluoroethylene monomer content of at least 95 mol-%, more preferably at least 99 mol-%. In a most preferred embodiment, the fluoropolymer is a homopolymer of tetrafluoroethylene repeating units, i.e. polytetrafluoroethylene (PTFE).

Examples for the fluoropolymer are polytetrafluoroethylene (PTFE), tetrafluoroethylene-hexafluoropropylene-copolymer, tetrafluoroethylene-chlorotrifluoroethylene-copolymer, tetrafluoroethylene-perfluoro-(2,2-dimethyl-1,3-dioxol)-copolymer and tetrafluoroethylene-perfluoro(C₁₋₆-alkylvinylether)-copolymer and tetrafluoroethylene-perfluoro(butenylvinylether)-copolymer.

In a most preferred embodiment, the fluoropolymer is a homopolymer of tetrafluoroethylene repeating units, i.e. polytetrafluoroethylene (PTFE).

As the starting material for fibrillation, the fluoropolymer can be applied as a surfactant-free or surfactant containing powder or a dispersion.

The formation of fibrils from said fluoropolymer can be achieved in accordance with the disclosure in EP 0 773 829 B1 (and documents cited therein), thereby forming a porous and fibrous matrix.

### (ii) Hydrophobic siliceous particles

The hydrophobic siliceous particles suitable for being used in the present invention are hydrophobic and are capable of adsorbing small organic polar molecules out of aqueous fluids and desorbing the these molecules under suitable conditions.

Particularly suitable are hydrophobic zeolites, i.e. zeolites with a molar ratio SiO₂:Al₂O₃ greater than 100:1, preferred even greater than 200:1, more preferred even greater than 500:1. Those zeolites are generally suitable for the adsorption of organic molecules such as alcohols (ethanol and butanol, for instance), ethers, ketones (acetone, for instance), aldehydes (acetaldehyde, for instance), esters (ethylacetate, for instance), carboxylic acids (formic acid and acetic acid, for instance) and the like. The organic molecules can be vaporized by application of a vacuum or by gas-stripping or by evaporation.

The SiO₂:Al₂O₃ ratio is determined by X-Ray Fluorescence Spectroscopy (XRF) of a sample which was dried one hour at 100°C and pressed to give a tablet using a binder and by translation of the molar Si:A1 ratio into a SiO₂:Al₂O₃ ratio.

The hydrophobicity of the hydrophobic siliceous particles may be improved by chemically converting the silanol groups on the particle surface using suitable modification agents.

In order to show appropriate adsorption properties, i.e. to adsorb a high amount of organic molecules per weight unit of the hydrophobic siliceous particles, the hydrophobic siliceous particles should have a high surface area per weight unit which is determined by the BET method. Suitable sorbents have a surface determined according to the BET method of 150 m²/g or greater, preferably 200 m²/g or greater, even more preferred are 300 m²/g or greater.

The particle surface area is determined using a fully automated nitrogen porosimeter (Micromeritics Type ASAP 2010) according to the method described in DIN 66131 (July 1993) as follows: The sample is cooled to liquid nitrogen temperature under high vacuum and nitrogen is continuously charged into the sample chamber. An adsorption isotherm is obtained by monitoring the adsorbed amount of gas as a function of pressure at constant temperature. Then the gas is removed stepwise and a desorption isotherm is monitored. In order to determine the specific surface area and the porosity according to the BET theory, the data are evaluated following DIN 66131 (July 1993).

In consideration of these aspects, zeolites of type Silicalite, β-zeolite, Mordenite, Y-Zeolite, MFI-Zeolite, Ferrierite (FER-Zeolite), dealuminated, ultra-stabile Zeolite Y (USY-Zeolite) and Erionite (ERI-Zeolite) are suitable. Silicalite is a zeolite essentially free of A1. The present invention also allows using mixtures of these zeolite types. Likewise, amorphous silica that has been surface-treated by converting silanol groups in a chemical reaction to siloxane groups as described hereinabove (such as silica grades commonly used as stationary phase in reversed phase chromatography) is suitable.

The size (d₅₀) of the hydrophobic siliceous particles used in the present invention preferably is in the range of from 0,5 to 100 µm, more preferably in the range of from 1 to 50 µm and even more preferably in the range of from 5 to 25 µm. A particle size selected form these ranges represents a good compromise between the specific surface area (i.e. the surface area per weight unit), which is generally higher with smaller particle size, and the handling and processing of the sorbent particulate, which is easier with larger particle size.

A single type of zeolite or a mixture of two or more types of zeolites can be used as the hydrophobic siliceous particles in the present invention. The single type of zeolite or the zeolite types can be used having a uniform particle size or can be used having different particle sizes.

### (iii) Optional further component

Optionally, one or more further components can be present in the composite membrane used in the present invention, which can be selected from auxiliary agents, surfactants, lubricants, activated carbon, pigments, glass beads and glass fibres.

The ratio of the weight of the fluoropolymer forming the matrix (i) to the total weight of said hydrophobic siliceous particles (ii) and the optionally present further component (iii) is in the range of from 2:98 to 80:20, preferably in the range of from 4:96 to 60:40, more preferably in the range of from 4:96 to 20:80, most preferably in the range of from 5:95 to 15:85.

The ratio of the weight of said hydrophobic siliceous particles (ii) to the weight of said further component (iii) is in the range of from 80:20 to 100:0, preferably in the range of from 90:10 to 100:0, more preferably in the range of from 95:5 to 100:0.

In a preferred embodiment, the ratio of the weight of the fluoropolymer forming the matrix (i) to the total weight of said hydrophobic siliceous particles (ii) and the optionally present further component (iii) is in the range of from 4:96 to 20:80, more preferably in the range of from 5:95 to 15:85, wherein the ratio of the weight of said hydrophobic siliceous particles (ii) to the weight of said further component (iii) is in the range of from 90:10 to 100:0.

### (iv) Optional thin sheet of a fluoropolymer

Optionally, a thin sheet of a fluoropolymer can be provided on the feed surface, the permeate surface or on both the feed surface and the permeate surface of the composite membrane.

The fluoropolymer of said thin sheet is a homo- or copolymer with a content of tetrafluoroethylene repeating units of at least 90 mol-% monomer content relative to the total amount of repeating units. It is chemically inert and does not swell upon water contact or contact with organic molecules. Preferably, the fluoropolymer has a tetrafluoroethylene monomer content of at least 95 mol-%, more preferably 99 mol-%.

Examples for said fluoropolymer are polytetrafluoroethylene (PTFE), tetrafluoroethylene-hexafluoropropylene-copolymer, tetrafluoroethylene-chlorotrifluoroethylene-copolymer, tetrafluoroethylene-perfluoro-(2,2-dimethyl-1,3-dioxol)-copolymer and tetrafluoroethylene-perfluoro(C₁₋₆-alkylvinylether)-copolymer and tetrafluoroethylene-perfluoro(butenylvinylether)-copolymer. PTFE is most preferably used.

In a preferred embodiment, the fluoropolymer from which the thin sheet is formed is the same type of polymer (i.e. it has the same chemical composition) as the fluoropolymer forming the matrix of the composite membrane.

Generally, the thickness of the thin sheet of a fluoropolymer can be selected such that the mechanical stability of the composite membrane is suitably improved. The higher the thickness of the thin layer, the lower is the permeability of the thin layer. Therefore, the thickness is selected such that an acceptable compromise between the permeability and the mechanical stability is achieved.

For this purpose, the thickness of the thin sheet of a fluoropolymer can preferably be in the range of from 10 to 500 µm, more preferably 20 to 200 µm, most preferably 30 to 100 µm.

### - Process step (b)

In process step (b), reduced pressure is applied to the second surface of the composite membrane of said composite membrane. The second surface of the composite membrane to which reduced pressure is applied and which is opposite to the surface of said composite membrane in contact with said feed mixture is also referred to as the "permeate surface" of the composite membrane.

The reduced pressure applied to the permeate surface of the composite membrane is set such that it is equal to or lower than the vapour pressure of permeate mixture at the temperature of the permeate surface of the composite membrane. Thus, in order to suitably select the reduced pressure applied to the permeate surface of the composite membrane, the pressure is reduced until a satisfactory flow of the permeate mixture is established and maintained at this value.

As a result, a permeate mixture is obtained on the surface of the composite membrane opposite to the surface of said composite membrane in contact with said feed mixture. As a result of the reduced pressure applied to the permeate surface of the composite membrane said permeate mixture is usually obtained in gaseous form.

Optionally, a purging gas stream with a gas (e.g. nitrogen) may be applied to improve flux of the permeate mixture.

### - Process step (c)

In process step (c), said permeate mixture obtained on the permeate surface of the composite membrane is collected.

In one embodiment, collecting the gaseous permeate mixture means that the gaseous permeate mixture is condensed by cooling or by increasing the pressure or by cooling and increasing the pressure such that the permeate mixture is obtained in liquid form. In a preferred embodiment, the gaseous permeate mixture is condensed and subsequently cooled such that it eventually solidifies, i.e. the permeate mixture is obtained in solid form.

In another embodiment, the permeate mixture is collected in gaseous form and stored under pressure higher than ambient pressure, i.e. in the form of a pressurized gas.

In yet another embodiment, said permeate mixture is further processed in gaseous form. In one embodiment, one of the components of the permeate mixture can be converted by means of a chemical reaction performed in the gas phase. For instance, the permeate mixture can be brought into contact with a solid catalyst.

### - Manufacture of the composite membrane

The composite membrane material is produced by mixing or kneading the above described amounts of components (i), (ii), and optionally (iii), thereby fibrillating the fluoropolymer (i) and homogeneously distributing the hydrophobic siliceous particles (ii) and optional further components (iii) therein.

The mixing or kneading is preferably performed at 30°C or higher to improve fibrillation and polymer processing. The upper temperature limit is determined by the thermal stability of the components and is typically lower than 200°C, preferably lower than 150°C.

To facilitate the mixing and shearing process, water or alcohol or other appropriate liquids may be added as an antifriction agent. However it is preferred to keep the amount of liquid as low as possible.

After the mixing and shearing process, the dough- to felt-like product is rolled out repeatedly and biaxially between heated rolls at a temperature of 40 to 150°C to give a mat, then a film of 0.2-2 mm, preferably 0.4-0.8 mm. Suitable for this step is a heatable calendar- or roll-press system with at least two rolls, preferably four rolls or more. Optionally a drying step is performed.

A suitable method of fabrication is described in EP 0 773 829 B1 and the documents cited therein.

On one or both surfaces of the film as described above, a thin fluoropolymer layer is laminated by rolling it in the heatable calender- or roll-press system of the above process, thereby firmly connecting the different layers to yield one sandwich membrane structure.

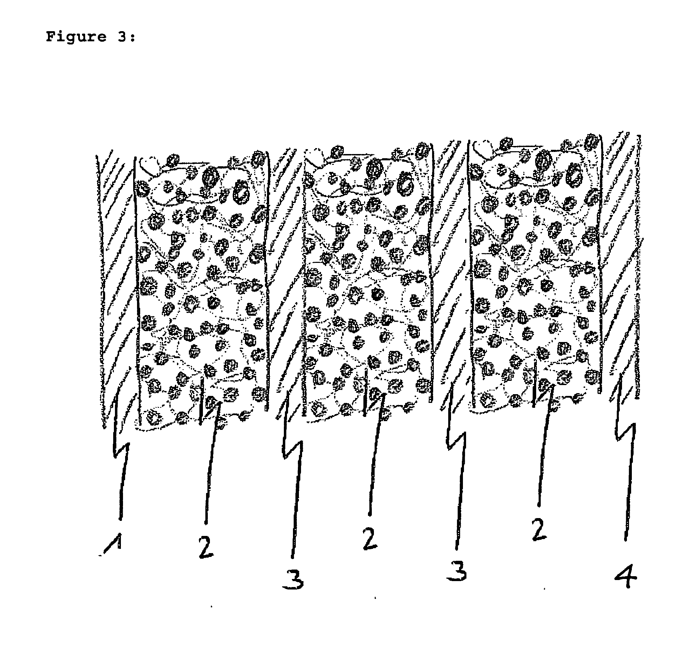

The composite membrane and the thin sheet (iv) can be arranged in a sequence as shown in figure 3.

### Brief Description of the Drawings

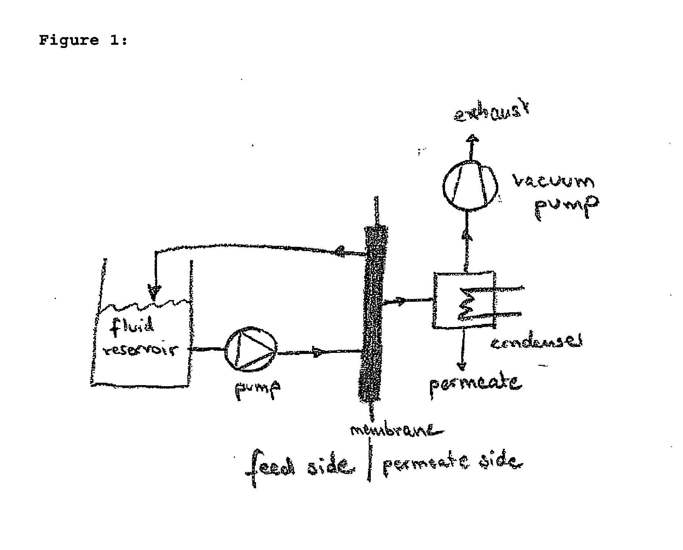

Fig. 1 is a schematic diagram of the pervaporation principle according to the invention: the fluid feed contacts the feed side of the membrane, thereby diffusing molecules into the membrane, and flows back into the reservoir. On the permeate side of the membrane the permeate migrates out of the membrane, enters the vapor phase due to vacuum and is condensed in a trap. It is not possible for the feed to avoid the membrane material to migrate from the feed side to the permeate side (there is no bypass).

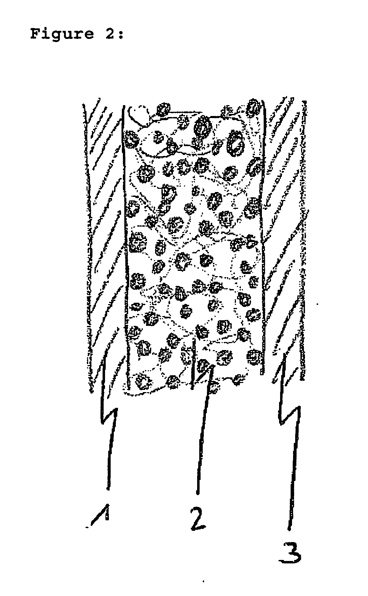

Fig. 2 is a schematic diagram of a preferred composite membrane used in the process of the present invention comprising hydrophobic siliceous particles dispersed throughout the fibrillated fluoropolymer matrix covered by thin PTFE layers on each side (1, 3 = fluoropolymer layer; 2 = mixed matrix membrane layer with siliceous particles and web-like PTFE fibrils).
Fig. 3 is a schematic diagram of a preferred composite membrane used in the process of the present invention comprising alternate layers of hydrophobic siliceous particles dispersed throughout the fibrillated fluoropolymer matrix and a thin PTFE layer with two thin PTFE layers on each outer side of the membrane (1, 4 = outer fluoropolymer layer; 2 = mixed matrix membrane layer with siliceous particles and web-like PTFE fibrils; 3 = inner fluoropolymer layer).

### Examples

The process according to the present invention is described by the following non-restricting examples:

### Example 1: Fabrication of a PTFE-zeolite composite material

25 g PTFE dispersion (ca. 60% PTFE, Sigma Aldrich) are mixed with 150 g zeolite powder (ZSM-5, H-Form; SiO₂/Al₂O₃ > 800; Süd-Chemie AG, Germany; now: Clariant Produkte (Deutschland) GmbH) and processed 45 minutes in a Werner&Pfleiderer LUK 075 lab kneader at 90°C, thereby fibrillating the PTFE and forming a non-dusting mixture.
After the kneading step the felt-like product is biaxially calendered with a Fetzel two roll calendar system at 50°C to a film of 0,5 mm thickness.

### Example 2: Laminating PTFE-layers onto the film of example 1

Five layers of PTFE film (thickness 45 µm) are stacked, placed upon both sides of the film of example 1 and calendered at a roll gap of 0,6 mm with the Fetzel two roll calendar system in one pass at a slow feed rate of 0,6-0,8 m/s to give a sandwich film system of thickness 0,75 mm. Out of the material, a round specimen of 80 mm diameter is punched out for testing.

### Example 3: Pervaporation experiment with 5% ethanol solution

1 liter of 5% w/w ethanol solution in water was added to a reservoir and from there pumped with a flow rate of 4 L/min over the membrane which was produced as described in examples 1 and 2. The retentate was pumped back into the reservoir. The temperature of the reservoir was kept at 60 °C using a heat jacket. On the other side of the membrane a vacuum was applied using a vacuum pump. The absolute pressure was kept constant at 10 mbar. The permeate was condensed using two cold traps which were cooled using liquid nitrogen. The experimental setup is depicted in Figure 1.

## Claims

1. Process for concentrating at least one chemical from a liquid or gaseous feed mixture comprising the steps
(a) contacting a liquid or gaseous feed mixture with a first surface of a composite membrane having two surfaces, wherein said feed mixture comprises
- at least one gaseous or liquid diluent and
- at least one chemical having a vapour pressure in pure form of 0.8 mbar or more at 20 °C,
and wherein said composite membrane consists of
(i) a matrix of a fluoropolymer in the form of fibrils, wherein said fluoropolymer has a content of tetrafluoroethylene repeating units of at least 90 mol-% relative to the total amount of repeating units,
(ii) hydrophobic siliceous particles enmeshed into said matrix,
(iii) optionally at least one further component selected from auxiliary agents, surfactants, lubricants, activated carbon, pigments, glass beads and glass fibres,
wherein the ratio of the weight of the fluoropolymer forming said matrix (i) to the total weight of said hydrophobic siliceous particles (ii) and said optional at least one further component (iii) is in the range of from 2:98 to 80:20, and the ratio of the weight of said component (ii) to the weight of said further component (iii) is in the range of from 80:20 to 100:0;
(b) applying reduced pressure to the second surface of the composite membrane which is opposite to the first surface in contact with the feed mixture such that a permeate mixture is obtained on said second surface of the composite membrane, wherein said permeate mixture has a higher content of said at least one organic component and/or hydrogen than said feed mixture;
(c) collecting said permeate mixture.

2. Process as defined in claim 1, wherein said feed mixture comprises more than 20 % by weight and less than 100 % by weight of at least one gaseous or liquid diluent relative to the total weight of the feed mixture.

3. Process as defined in claim 1, wherein said feed mixture comprises more than 50 % by weight and less than 100 % by weight of at least one gaseous or liquid diluent relative to the total weight of the feed mixture.

4. Process as defined in any of claims 1 to 3, wherein said at least one chemical is hydrogen and/or at least one organic component having 1 to 6 carbon atoms and a vapour pressure in pure form of 0.8 mbar or more at 20 °C.

5. Process as defined in claim 4, wherein said at least one gaseous or liquid diluent is water.

6. Process as defined in any of claims 1 to 5, wherein wherein said fluoropolymer forming said matrix (i) has a content of tetrafluoroethylene repeating units of at least 95 mol-% relative to the total amount of repeating units.

7. Process as defined in any of claims 1 to 6, wherein the ratio of the weight of the fluoropolymer forming said matrix (i) to the total weight of said hydrophobic siliceous particles (ii) and said optional at least one further component (iii) is in the range of from 4:96 to 60:40.

8. Process as defined in any of claims 1 to 6, wherein the ratio of the weight of the fluoropolymer forming the matrix (i) to the total weight of said hydrophobic siliceous particles (ii) and the optionally present further component (iii) is in the range of from 4:96 to 20:80 and wherein the ratio of the weight of said hydrophobic siliceous particles (ii) to the weight of said further component (iii) is in the range of from 90:10 to 100:0.

9. Process as defined in any of claims 5 to 8, wherein said feed mixture comprises water in an amount of more than 80 % by weight and less than 100 % by weight relative to the total weight of the feed mixture.

10. Process as defined in claim 9, wherein said feed mixture comprises water in an amount of more than 90 % by weight and less than 100 % by weight relative to the total weight of the feed mixture.

11. Process as defined in claim 10, wherein said feed mixture comprises water in an amount of more than 95 % by weight and less than 100 % by weight relative to the total weight of the feed mixture.

12. Process as defined in any of claims 4 to 11, wherein said at least one organic component is an alcohol.

13. Process as defined in claim 12, wherein said at least one organic component is ethanol, n-butanol or i-butanol.

14. Process as defined in any of claim 4 to 11, wherein said at least one organic component is selected from ethanol, n-butanol, i-butanol, acetone and a combination thereof.

15. Process as defined in claim 5, wherein said feed mixture is a fermentation broth.

16. Process as defined in any of claims 6 to 15, wherein said fluoropolymer forming said matrix (i) has a content of tetrafluoroethylene repeating units of at least 99 mol-% relative to the total amount of repeating units.

17. Process as defined in any of claims 1 to 16, wherein a thin sheet of a fluoropolymer is provided on said first surface of the composite membrane, wherein said fluoropolymer has a content of tetrafluoroethylene repeating units of at least 90 mol-% relative to the total amount of repeating units.

18. Process as defined in claim 17, wherein a thin sheet of a fluoropolymer is provided on said first and said second surface of the composite membrane, wherein said fluoropolymer has a content of tetrafluoroethylene repeating units of at least 95 mol-% relative to the total amount of repeating units.
